# EUROPEAN PATENT SPECIFICATION

(11) **EP 3 372 041 B1**
(45) Date of publication and mention of the grant of the patent: **06.01.2021**
(21) Application number: 16797771.9
(22) Date of filing: 03.11.2016
(51) Int. Cl.: H04W 74/02

(54) **SCHEDULING AND ACCESSING OF UPLINK RESOURCES**
PLANUNG VON UND ZUGRIFF AUF UPLINK-RESSOURCEN
PROGRAMMATION DE RESSOURCES DE LIAISON MONTANTE ET ACCÈS

(30) Priority: 06.11.2015 US 201562251809 P
(43) Date of publication of application: 12.09.2018
(73) Proprietor: Telefonaktiebolaget LM Ericsson (publ), 164 83 Stockholm (SE)
(72) Inventor: SKÖRDEMAN, John, 590 45 Brokind (SE); FRÖBERG OLSSON, Jonas, 590 74 Ljungsbro (SE); MATTSSON, Johan, 172 69 Sundbyberg (SE); ANDERSSON, Håkan, 585 99 Linköping (SE); BISWAS, Ashim, 192 74 Sollentuna (SE)
(74) Representative: Ericsson
(86) International application number: PCT/EP2016/076558
(87) International publication number: WO 2017/076973

(56) References cited:
- WO-A1-2016/164465
- US-A1- 2014 362 780
- FUJITSU: "Evaluation of some sensing options for UL LBT", 3GPP DRAFT; R1-155155 FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 4 October 2015 (2015-10-04), XP051039589, Retrieved from the Internet: URL:http://www.3gpp.org/ftp/Meetings_3GPP_ SYNC/RAN1/Docs/ [retrieved on 2015-10-04]
- ZTE: "LBT Impacts On High Layers for LAA", 3GPP DRAFT; R2-152327 LBT IMPACTS ON HIGH LAYERS FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 24 May 2015 (2015-05-24), XP050970809, Retrieved from the Internet: URL:http://www.3gpp.org/ftp/Meetings_3GPP_ SYNC/RAN2/Docs/ [retrieved on 2015-05-24]
- "Digital cellular telecommunications system (Phase 2+); Base Station Controller - Base Transceiver Station (BSC - BTS) interface; Layer 3 specification (GSM 08.58 version 5.6.0)", 3GPP STANDARD; GSM 08.58, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Version 5.6.0, 1 January 1998 (1998-01-01), pages 1-74, XP050381965,

## Description

### TECHNICAL FIELD

The present disclosure relates to telecommunications and in particular to methods of scheduling uplink resources and accessing uplink resources as well as corresponding computer program products. A radio-access network node and a wireless communication device are also disclosed herein.

### BACKGROUND

The 3rd Generation Partnership Project (3GPP) Rel-13 work item "License-Assisted Access" (LAA) intends to allow LTE (Long Term Evolution) equipment to also operate in the unlicensed 5 GHz (Gigaherz) radio spectrum. This is generally known as LAA-LTE or LTE-U. The unlicensed 5 GHz spectrum is used as a complement to the licensed spectrum. Accordingly, devices connected in the licensed spectrum (also called primary cell (P-cell)) may use carrier aggregation to benefit from additional transmission capacity in the unlicensed spectrum (secondary cell (SCell)). To reduce the changes required for aggregating licensed and unlicensed spectrum, the LTE frame timing in the primary cell may simultaneously be used in the secondary cell.

There are also other frequency bands, such as the 3.5 GHz radio spectrum, where operation of a radio access technology, e.g. LTE, on the same frequency band as other radio access technologies is possible, in addition to the frequency bands already widely in use for LTE.

Other examples of such frequency bands include the industrial, scientific and medical (ISM) band in which IEEE 802.11 type networks (generally termed wireless local area networks or WLAN) currently operate, and also what is known as television whitespaces TVWS. These frequency bands may be in simultaneous use by different users operating according to different radio access technologies (RATs), such as evolved universal terrestrial radio access network (E-UTRAN) and WLAN. An example of operating wireless communication devices making use of such shared frequency band(s) is disclosed in international patent publication WO 2013167557 A1. Therein either E-UTRAN (Evolved UMTS (Universal Mobile Telecommunications System) Terrestrial Radio Access) or a WLAN (Wireless Local Area Network) standard is used for data transmissions on unlicensed bands.

US 2014/362780 A1 describes a method for determining an availability of an unlicensed spectrum, in response to an uplink grant received over a licensed spectrum.

### SUMMARY

When using LTE on an unlicensed band, the radio-access network node and the wireless communication device can transmit only when the channel is free - as the unlicensed band is shared with WLAN and/or other radio access technologies.

Thus, the problem may occur that an uplink grant may only reach the wireless communication device delayed due to listen-before-talk (LBT) failure on the downlink (DL) or that an uplink (UL) grant may expire due to LBT failure in the UL.

According to a first aspect a method of scheduling uplink resources is proposed, the method comprising: a radio-access network node transmitting an uplink grant and an uplink indication, said uplink indication determining a validity duration of said uplink grant. The radio access node further transmitting, in subsequent subframes, subsequent uplink grants and subsequent uplink indications until an uplink transmission of a wireless communication device is received. The radio-access node shifting forward, the validity duration with each subsequent uplink grant, where shifting forward the validity duration comprises shifting the validity duration forward for a duration of one subframe.

According to a second aspect a method of accessing uplink resources is proposed, the method comprising: a wireless communication device receiving an uplink grant and an uplink indication, said uplink indication determining a validity duration of said uplink grant. The wireless communication device further receiving, subsequent uplink grants and subsequent uplink indications, comprising uplink resources overlapping in time and/or frequency, storing, by the wireless communication device, a first uplink grant, of the uplink grant and subsequent uplink grants, that is successfully received and decoded by the wireless communication device, and discarding, by the wireless communication device, overlapping uplink grants received following the first uplink grant.

According to a third aspect a radio-access network node for scheduling uplink resources is proposed, the radio-access network node operative to transmit an uplink indication, said uplink indication determining a validity duration of an uplink grant. The radio-access network node performs the method as described in the first aspect.

According to a forth aspect a wireless communication device for accessing uplink resources is provided, the wireless communication device operative to receive an uplink indication, said uplink indication determining a validity duration of an uplink grant. The wireless communication device performs the method as described in the second aspect.

According to a fifth aspect a computer program product comprising program code is proposed, the program code to be executed by a processor of a radio-access network node, thereby configuring the node to operate in accordance with a method as defined by the first aspect.

According to a sixth aspect a computer program product comprising program code is proposed, the program code to be executed by a processor of a wireless communication device, thereby configuring the wireless communication device to operate in accordance with a method as defined by the second aspect.

### BRIEF DESCRIPTION OF THE DRAWINGS

Fig. 1 schematically illustrates a wireless communication network;
Fig. 2 schematically illustrates unlicensed and licensed frequency bands;
Fig. 3 schematically illustrates coexisting first and second radio access technologies;
Fig. 4 schematically illustrates a listen-before-talk mechanism for accessing a communication channel;
Fig. 5 schematically illustrates an attempt to access resources as indicated in a previously received uplink grant;
Fig. 6 shows a flowchart of an example of transmitting an uplink grant and an uplink indication;
Fig. 7 shows a flowchart of an example of receiving an uplink grant and an uplink indication;
Fig. 8 shows an illustration of accessing of downlink and uplink channel following a listen-before-talk mechanism,
Fig. 9 shows an illustration of repeatedly transmitting uplink grants until an uplink channel is accessed by the wireless communication device;
Fig. 10 shows a flowchart for carrying out an exemplary embodiment by a wireless communication device;
Fig. 11 schematically illustrates exemplary structures for implementing the above-described concepts in radio-access network node;
Fig. 12 schematically illustrates exemplary structures for implementing the above-described concepts in a wireless communication device.

### DETAILED DESCRIPTION

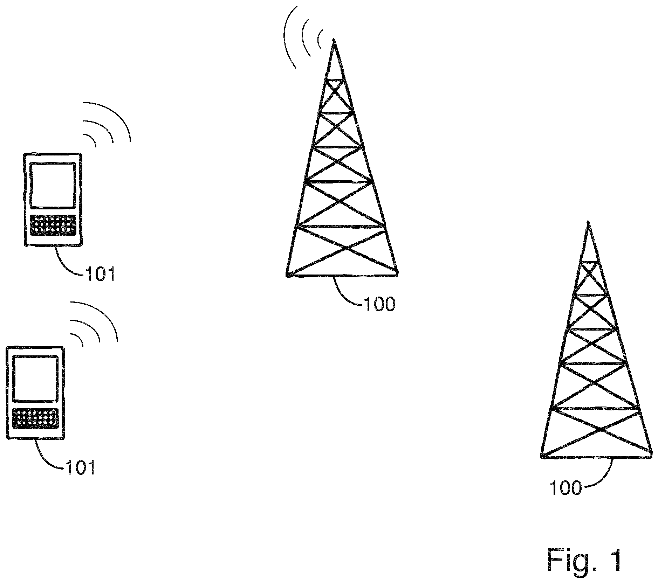

Figure 1 illustrates a wireless communication network comprising one or more radio-access network nodes 100 and one or more wireless communication devices 101.

In the following description, for purposes of explanation and not limitation, specific details are set forth such as particular architectures, scenarios, techniques, etc. in order to provide thorough understanding of the exemplary embodiments of the present invention. However, it will be apparent for the person skilled in the art that the exemplary embodiments of the present invention may be practiced in other embodiments that depart from these specific details. The different embodiments of the present invention are described herein by way of reference to particular example scenarios. In particular the embodiments are described in a non-limiting general context in relation to a communications network based on the fourth generation (4G) LTE concept. It should be noted that the embodiments of the present invention are not restricted to LTE but can be applicable in other radio access technologies.

A wireless communication device may be for example an user equipment (UE), a MTC (Machine Type Communication)-device, a mobile phone, a smartphone, a data modem, a mobile computer, or another kind of terminal device. The wireless communication network may be a cellular network, e.g. in accordance with a specification of 3GPP, for example Release 12. The wireless communication network may comprise one or more radio-access network nodes. A radio-access network node 100 may be by way of example a base station such as a NodeB, eNB (Evolved Node B) or the like.

The wireless communication device 101 may be in the coverage area of a first radio-access network node 100. The wireless communication device may thus be associated with that radio-access network node 100 and/or communicate with that radio-access network node via one or more communication channels in the UL and/or DL.

The wireless communication device may comprise a radio interface for wireless communication. The radio interface may be different Layers, i.e. Layer 1, 2 and 3. The physical layer (Layer 1) interfaces the Medium Access Control (MAC) sub-layer of Layer 2 and the Radio Resource Control (RRC) Layer of Layer 3. The radio interface may be coupled to a radio unit that transforms a baseband signal into a radio transmission in a predefined frequency band. There is, however, a delay from the time that a Layer 2-based scheduler has assembled a signal until it appears as a radio transmission on the medium. This is typically in the order of 1-2 ms in LTE. As there is no channel sensing in LTE, it is the responsibility of the scheduler to make sure there are no collisions on a communication channel used. The radio-access network node's scheduler may dynamically control which time/frequency resources, such as frequency allocation in a subframe, are allocated to a certain wireless communication device at a given time. The strict synchronicity (between the radio-access network node and the (one or more) wireless communication devices) of all transmissions to subframes makes this possible.

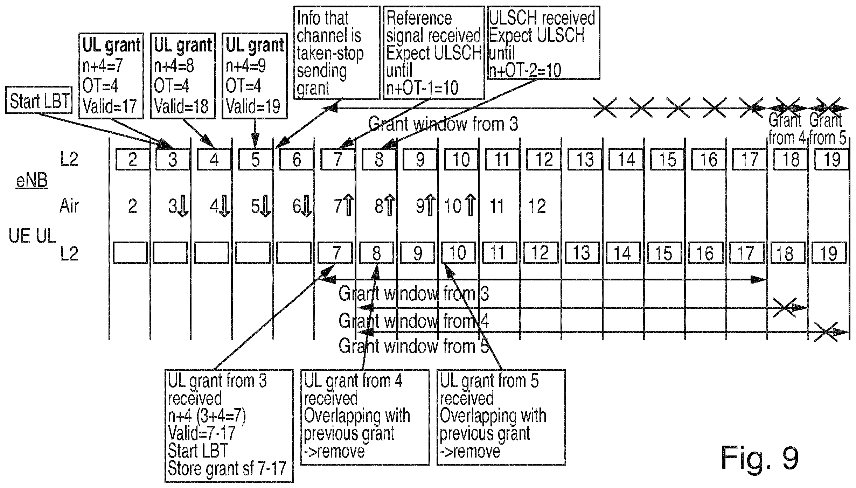

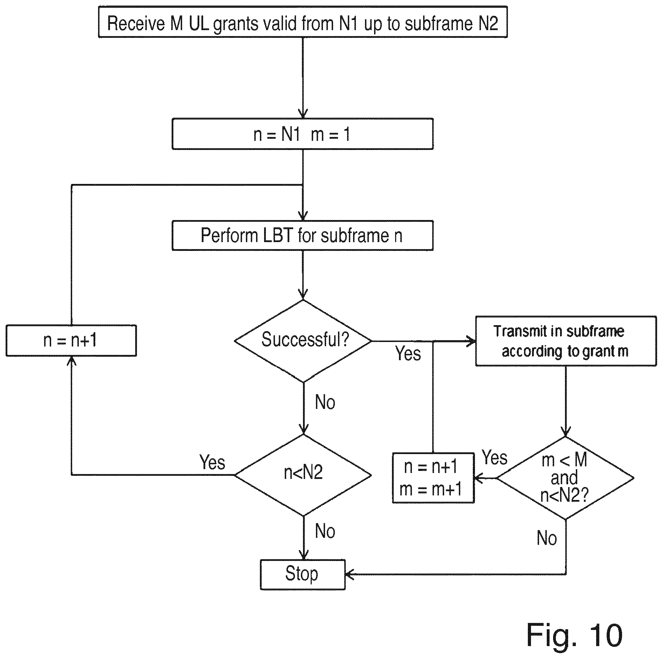

This synchronicity of the radio frames and/or subframes is also depicted in Figure 9 and Figure 10. A radio-access network node and a wireless communication device may be synchronized using subframe numbers and system frame numbers. When a wireless communication device is switched on, it first synchronizes to a radio-access network node by detection of the synchronization signal from the radio-access network node. This will align the subframe timing of the wireless communication device to the radio-access network node.

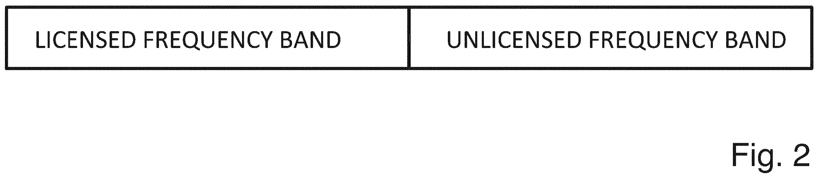

License-Assisted Access via LTE (LAA-LTE) is one of the main work items for the 3GPP LTE Release 13 standard being proposed as a technology for operation on both licensed and unlicensed spectrum. In an LAA-LTE deployment, the wireless communication device connects to a network on a regular, licensed frequency band, the so-called P-cell (Primary cell). In addition, it can also be connected to the same network on an unlicensed frequency band, the S-cell (Secondary cell). There may be more than one S-cell, i.e. more than one carrier in the unlicensed band. The unlicensed frequency band can be used to off-load the licensed frequency band for data whenever it is available. In this way the licensed frequency band can be used for robust control signaling and the unlicensed frequency band may be used to boost user-data rates in a best-effort fashion. Licensed and unlicensed frequency band may be adjacent as illustrated in Figure 2.

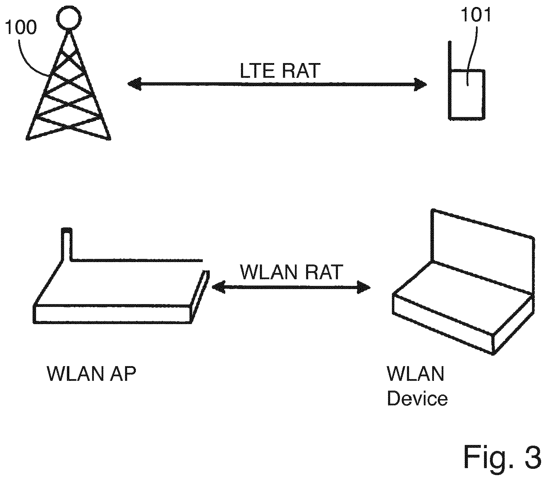

It is thus a purpose to find a solution to handle coexistence with other access technologies, such as WLAN, and also between several LAA-LTE systems in an unlicensed frequency band. Such a situation is depicted in Figure 3, where a WLAN access point (AP) communicates with a WLAN device in the vicinity of a radio-access network node and a wireless communication device. As explained in the above, WLAN may operate on an unlicensed frequency band, whereas LTE is operated on a licensed and/or unlicensed frequency band. As LAA-LTE and WLAN are just an example, this applies to any first and second radio access technology designed to operate in an unlicensed and/or licensed frequency band respectively.

It is also possible to use LTE-based technology in a stand-alone fashion in an unlicensed band. This is commonly referred to as LTE-U. This requires further modifications to the current LTE specification as the P-cell is no longer available.

Operation of a radio access technology in the unlicensed frequency band may however possess additional constraints - especially in the case where a first and a second radio access technology are employed in the unlicensed frequency band. Listen-Before-Talk (LBT) is a protocol where the desired channel on the wireless medium is first sensed for any potentially interfering transmissions before a transmission begins. If the medium is found to be free, then the transmitter can start using it. As the radio-access network node or the wireless communication device may be a transmitter, both may make use of LBT. Together with a back-off mechanism an LBT-protocol potentially avoids collisions. See, for example, the Load-Based Equipment (LBE) protocol described in ETSI EN 301 893. The LBT protocols usually consist of a number of steps that include:
- Listen to medium - measure the received signal with procedures such as Clear-Channel Assessment (CCA);
- Decision of medium busy/free - based on energy detection and/or decoding of signal;
- Start transmission - if medium is free, and after a defined back-off period, the transmitter starts the transmission.

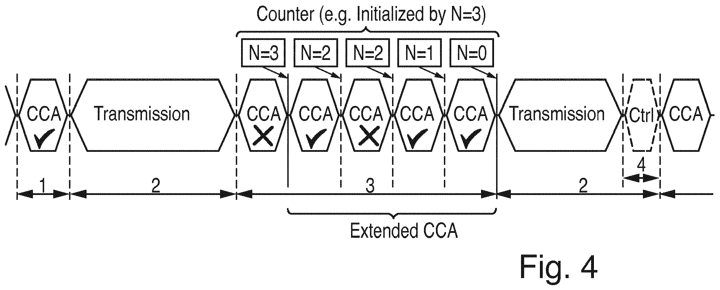

An exemplary LBT mechanism is illustrated in Figure 4. For accessing a communication channel, e.g. for an UL or downlink transmission, in the unlicensed frequency band the following LBT mechanism which today is used by WLAN may also be used for LTE transmissions such as LTE-U or LAA-LTE:
1) Before a transmission or a burst of transmissions on a communication channel, the transmitter shall perform a Clear Channel Assessment (CCA) check using "energy detect". The transmitter shall observe the communication channel(s) for the duration of the CCA observation time which shall be not less than a preconfigured number of microseconds. The communication channel shall be considered occupied if the energy level in the channel exceeds the threshold corresponding to the power level given below.
2) If the equipment finds the communication channel to be clear, it may transmit immediately.
3) If the equipment finds the communication channel occupied, it shall not transmit in that channel. The equipment may then perform an extended CCA check in which the communication channel is observed for the duration of a random factor N multiplied by the CCA observation time. N defines the number of clear idle slots resulting in a total Idle Period that need to be observed before initiation of the transmission. The value of N may be randomly selected in the range 1...q every time an extended CCA is required and the value stored in a counter. The value of q may be selected in the range 4...32. The counter is decremented every time a CCA slot is considered to be "unoccupied". When the counter reaches zero, the equipment may transmit. The total time that an equipment makes use of a communication channel is the Maximum Channel Occupancy Time OT which shall be less than (13/32) × q ms, with q as defined above, after which the transmitter may again perform the Extended CCA described above.

The receiver, upon correct reception of a packet which was intended for this receiver, can skip CCA and immediately proceed with the transmission of management and control frames (e.g. ACK and Block ACK frames). A consecutive sequence of transmissions by the equipment, without it performing a new CCA, shall not exceed the Maximum Channel Occupancy Time OT above. For the purpose of multi-cast, the ACK transmissions (associated with the same data packet) of the individual devices are allowed to take place in a sequence.

In addition to the channel access method described in the above further requirements may have to be met when accessing and transmitting in an unlicensed frequency band.

For example, following regulatory directives, the unlicensed frequency band may not be utilized for long periods of time without letting other transmitters have a chance to transmit. It is to be understood that devices such as a radio-access network node and/or a wireless communication device can be the transmitter and/or the receiver. The maximum duration of an LAA-LTE transmission depends on regional regulations. In some cases the maximum duration of a transmission is as short as a channel-access time of 4 ms. However, in order to synchronize and align subframe timing (as described in the above) a loss of up to 1 ms of the channel-access time may occur. Especially in the case of LTE-U sending of UL data requires two LBT procedures. First the radio-access network node needs to perform an LBT procedure to send the UL grant to the wireless communication device, e.g. on the DL control channel, and then the wireless communication device needs to perform an LBT procedure to transmit data in the UL.

An uplink grant may contain information about resource allocation for the uplink, e.g., a physical uplink shared channel (PUSCH), and may be signaled in the downlink, e.g., a physical downlink control channels (PDCCHs), preferably in the first 1, 2 or 3 OFDM (Orthogonal frequency-division multiplexing) symbols in a downlink subframe.

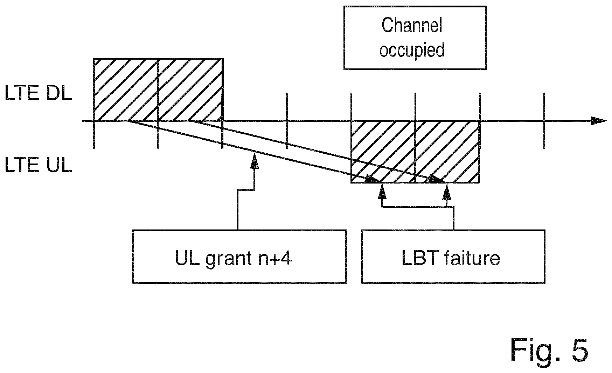

Now turning to Figure 5, in FDD (Frequency Division Duplex), the radio-access network node grants/schedules the wireless communication device according to LTE to transmit in the UL four subframes (SF) after the UL grant is transmitted. Hence, there is a delay of four subframes between when the UL grant is transmitted in the DL and when the actual UL transmission takes place.

In TDD (Time Division Duplex), the wireless communication device is configured with a TDD scheme with information on which subframes shall be used for UL transmission and which shall be used for DL transmission. According to the current LTE standard, i.e. Release 12, it is possible to schedule the wireless communication device to use the next possible UL transmission opportunity or to use the next opportunity thereafter, or to use both of these opportunities. However, this principle of fixed relationships between the subframe containing the UL grant and the corresponding UL transmission(s) does not work well in unlicensed spectrum since there is no fixed configuration of UL and DL subframes and also no guarantee that channel access is obtained.

When using LTE on an unlicensed band, the radio-access network node and the wireless communication device can transmit only when the channel is free as it is shared with WLAN and/or other radio access technologies. When the radio-access network node wants to transmit a scheduled UL grant it must first access a DL communication channel using an LBT procedure. If the accessing the communication channel succeeds early enough within a subframe the UL grant might be decoded by the wireless communication device within that subframe provided that a moderately aggressive coding and modulation scheme is used. Otherwise the uplink grant transmitted in the DL transmission is lost and cannot be used. One way to avoid that the UL grant is non-decodable in the wireless communication device due to partial subframe transmission, is to always send UL grants two subframes in a row. However, if due to the LBT procedure it takes two subframes to access the communication channel, the UL grants will already be expired by the time they are decoded by the wireless communication device.

In LTE the UL grant given by the radio-access network node is valid in subframe n+4, given that the subframe in which the UL grant is transmitted has subframe number n. When the wireless communication device receives and/or decodes the UL grant it will attempt accessing the communication channel, e.g. as indicated by the uplink grant, using the LBT procedure. However, due to LBT failure as described above for the DL transmission of the UL grant, it is not guaranteed that the wireless communication device succeeds to access the communication channel early enough in order to successfully transmit the data in the UL. This illustrated by the square designates as "Channel occupied" in Figure 5. Thus, the UL grant was given explicitly for subframe n+4, the wireless communication device has no further transmission opportunity.

A DL transmission (containing an UL grant) is depicted in Figure 5 as a square on the upper side of the arrowed lines whereas UL transmission is depicted as a square on the lower side of the arrowed line. The vertical bars intersecting the arrowed line in Figure 5 illustrate subframes.

The radio-access network node may also transmit an UL grant for data transmission in the UL for more than one subframe. This has the benefit that the number of subframes for UL transmission is not limited to the number of DL transmissions. However, such an UL grant may likewise never reach the wireless communication device due to LBT-failure on the DL or that the UL grant may expire due to LBT failure in UL.

The subframe(s) for which the UL grant is valid may thus be dynamic, e.g. given as a number of subframes, in particular within a radio frame, for example defined by a first and a last subframe (for example within a radio frame).

One or more UL grants (granting UL transmission within one or more subframes) may thus not be valid only for one or more specific subframes. Instead, one or more UL grants may be valid for a number or a plurality of subframes.

One or more UL grants may be valid and thus used by the wireless communication device from the point in time the wireless communication device succeeded in accessing a communication channel, that is, from the time the UL LBT-procedure succeeded. Furthermore, a time window may be introduced that specifies the expiration time for the one or more UL grants. This time window may determine the validity of the uplink grant such that the UL grant is valid during the time window and becomes invalid once the time window expired.

This provides the advantage that more UL grant decisions prepared by the UL scheduler in the radio-access network node, for example based on a wireless communication device's buffer report(s), will result in actual UL (data) transmissions from the wireless communication device. Hence, every UL grant that cannot be used (because of LBT failure) may lead to a new UL grant for retransmission (up to the end of the validity duration of the UL grant). Consequently less UL grant (re-)transmissions are required, and therefore, a decreased UL round-trip delay (from scheduling decision to UL transmission) is achieved.

It is a further advantage that one or several UL grants received by the wireless communication device may be used within a time window, corresponding to a validity duration of the uplink grant(s). The UL grant may then be used once a communication channel has been accessed by the wireless communication device. Further on, the risk of an UL grant expiring due to LBT failure is reduced. Since every UL grant which cannot be used (because of LBT failure) may lead to a new UL grant being transmitted by the radio-access network node it is highly beneficial if as many UL grants received by the wireless communication device are actually used for UL transmission. Additionally, when less UL grant retransmissions by the radio-access network node are required a decreased UL round-trip delay (from scheduling decision to UL transmission) is achieved.

In order to signal the validity duration to the wireless communication device an uplink indication may be used which is transmitted to the wireless communication device.

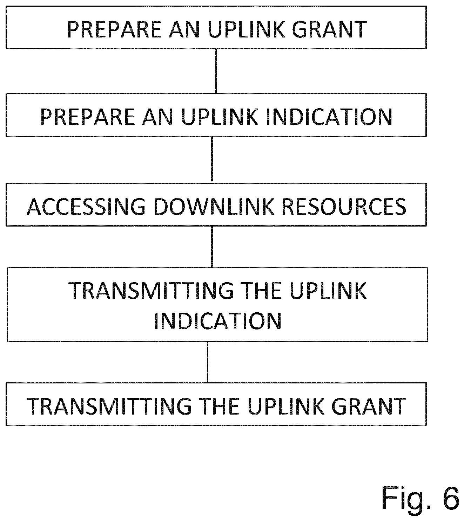

Now turning to Figure 6 which shows a flowchart of an exemplary embodiment carried out by a radio-access network node. The radio-access network node may assign some time and/or frequency resources to a wireless communication device for data transmission from the wireless communication device to the radio-access network node. Thus an uplink grant is prepared, e.g. by the scheduler of the radio-access network node. Additionally, the radio-access network node may determine a validity duration for said uplink grant prepared or rely on a pre-set validity duration, which is for example retrieved from a database in a memory. This validity duration may be encoded in an uplink indication or may itself be the uplink indication which is transmitted to the wireless communication device.

The uplink indication may thus be dedicated to one or more wireless communication devices. Alternatively, the uplink indication may be dedicated to one or more uplink grants. Said one or more uplink grants may contain information about resources for UL data transmission in an unlicensed or shared frequency band.

As the case may be, the uplink grant may be prepared together with the uplink indication or the two may be prepared separately and then attached to one another. For example the uplink grant may contain an (additional) indicator which determines the validity duration of the uplink grant.

In order to transmit, e.g. data in the downlink or control information, the radio-access network node accesses downlink resources also referred to as communication channel. This may be done by way of an LBT-mechanism. It is to be understood that a LBT mechanism may comprise different routines and steps such as CCA (Clear Channel Assessment), CSMA/CA (Carrier Sense Multiple Access/Collision Avoidance) and/or CSMA/CD (Carrier Sense Multiple Access/Collision Detection) etc. and that all of these are understood as LBT-mechanisms or -procedures.

In case of successfully accessing the channel, i.e. the channel is free to transmit, the uplink indication and/or the uplink grant are transmitted. As the uplink indication can be signaled implicitly, uplink grant and uplink indication may be transmitted at the same time.

Also, the case may appear that said uplink indication is not transmitted together with the uplink grant but before or after transmitting the uplink grant. Also an uplink indication transmitted together with a first uplink grant may be valid for a second and or any further number of uplink grants subsequently transmitted.

Further on, an uplink indication may be transmitted periodically or event-related. For example an uplink indication may only be transmitted after a certain number of uplink grants have been transmitted. Alternatively, or additionally, an uplink indication is transmitted in case the validity duration has changed, the validity duration has been adapted by the radio-access network node, or it is intended to adapt the validity duration (e.g., the validity duration is (re-)determined by the wireless communication device after receiving the uplink indication).

Further steps the radio-access network node may perform are described in the following: The radio-access network node may transmit said uplink grant. The radio-access network node may transmit said uplink grant together with said uplink indication, wherein preferably said indication is part of said uplink grant. The uplink grant may comprise a number of granted subframes for uplink transmission. This is also referred to as uplink (communication) channel. The uplink indication may determine at least one of the following: a number of subframes; an expiration time for which the uplink grant is valid. The validity duration may thus be a number of subframes and/or an expiration time for the uplink grant(s).

The radio-access network node may transmit the uplink indication and/or said uplink grant using Listen-Before-Talk and/or on a contention based access channel. The radio-access network node may transmit said uplink indication and/or said uplink grant in an unlicensed frequency band, e.g. a frequency band shared between different radio access technologies, also referred to as a shared frequency band.

The radio-access network node may dedicate said uplink grant to a (certain) wireless communication device. The radio-access network node may subsequently transmit, e.g. in subsequent and/or consecutive subframes, uplink grants and/or uplink indications, and/or the radio-access network node may shift forward the validity duration with each subsequent and/or consecutive uplink grant, e.g. shifting the validity duration forward for the duration of one or more subframes.

The radio access network node may after transmitting said uplink indication and/or said uplink grant detect an uplink transmission of said wireless communication device. The radio-access network node may determine a number of subframes for reception of uplink data from said wireless communication device based on said number of granted subframes. The radio access network node may detect an uplink transmission of said wireless communication device by way of a reservation signal transmitted by the wireless communication device, e.g. a Sounding Reference Signal (SRS) or a Demodulation Reference Signal (DMRS) of the wireless communication device. Detecting an uplink transmission of a wireless communication device may also take place by decoding data received in the uplink, e.g. by decoding a cyclic redundancy checksum (CRC). As the CRC is attached to a data block and is indicative of a specific wireless communication device, the wireless communication device may thereby be identified.

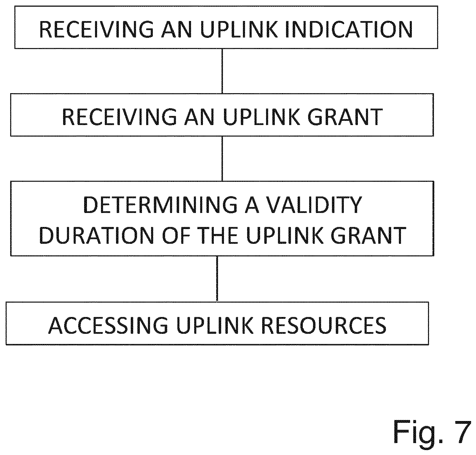

Now turning to Figure 7, an exemplary embodiment carried out by the wireless communication device is shown. The wireless communication device may receive the uplink indication and/or the uplink grant transmitted by the radio-access network node. Reception may be understood as (successfully) decoding the signals transmitted by the radio-access network node.

As explained in the above an uplink indication may be received periodically or sporadically (e.g., because it is transmitted in an event related manner by the radio-access network node).

Upon reception of the uplink indication the validity duration may be determined, e.g. calculated based on the information received by way of the uplink indication.

If the uplink grant is still within the validity duration determined an access attempt to an uplink communication channel and/or a transmission of data via said uplink communication channel may be performed. Thus by way of the uplink indication a time window for uplink data transmission is established. The time window may allow the wireless communication device to transmit data in the uplink according to the uplink grant if the communication channel can be accessed by the wireless communication device within that time window. The time window may be characterized by a number of subframes, e.g. by providing a first subframe number and a last subframe number for which the uplink grant is valid. The time window may begin to run for a number of subframes after the wireless communication device succeeds in accessing a communication channel after an LBT-procedure. The time window is preferably larger than the number of subframes granted for UL data transmission by way of an UL grant received by the wireless communication device.

Further steps performed by the wireless communication device are provided in the following: The wireless communication device may receive one or more uplink grants. The wireless communication device may receive said one or more uplink grants together with said uplink indication, preferably as part of said uplink grant. The uplink grant may comprise a number of granted subframes for uplink transmission. The uplink indication may determine at least one of the following: a number of subframes; an expiration time for which the uplink grant is valid.

The wireless communication device may receive subsequent and/or consecutive uplink grants and/or uplink indications comprising uplink resources overlapping in time and/or frequency, and/or the wireless communication device may perform an uplink transmission according to a first uplink grant and/or a first uplink indication of the subsequent uplink grants and/or the uplink indications.

The wireless communication device may (attempt to) access uplink resources (according to an uplink grant received) and/or the wireless communication device may transmit dependent on a number of granted subframes uplink data to the radio-access network node. Accessing uplink resources or attempting to access uplink resources may be performed as long as the one or more received uplink grants received are valid, e.g., the validity duration has not expired.

The wireless communication device may (attempt) to access said uplink resources in an unlicensed frequency band, e.g. a frequency band shared between different radio access technologies. The wireless communication device may attempt to access said uplink resources using Listen-Before-Talk.

The wireless communication device may access said uplink resources by way of transmission of a reservation signal, e.g. a Sounding Reference Signal (SRS) or a Demodulation reference signal (DMRS) of the wireless communication device. The wireless communication device may also transmit a random noise signal in order to reserve and/or access the communication channel. The wireless communication device may also access said communication channel by way of transmitting data in the uplink.

The examples provided below as well as the ones beforehand concern one wireless communication device, but may apply to multiple wireless communication devices as well.

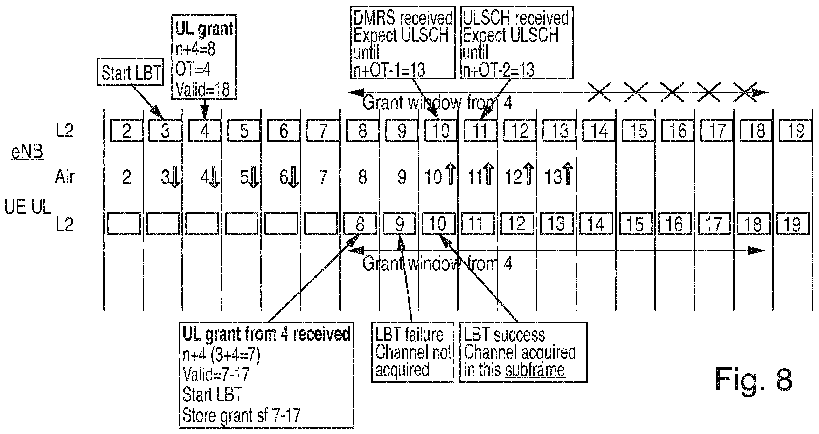

Now turning to Figure 8, another exemplary embodiment for scheduling uplink resources by a radio-access network node and accessing these resources by a wireless communication device are is illustrated. The radio-access network node may comprise a scheduler. The scheduler may prepare an UL grant comprising an uplink indication for a wireless communication device. The uplink grant thus comprising at least one of the following: a number of granted subframes; a point in time from when on the UL grant is valid, e.g. by way of a subframe number n+x, where n is current subframe and x number of subframes (ms) in the future; a time window within which the UL grant is valid, e.g. an expiration time. Until the end of time window or the expiration time, as the case may be, the radio-access network node may not be able to transmit in the DL, e.g. may be configured accordingly, and is be prepared for data reception in the UL. As depicted in Figure 8, the scheduler and/or the coding/decoding may be implemented in Layer 2 of the radio-access network node.

The radio-access network node, denoted as eNB in Figure 8, attempts to access the medium in a subframe, here subframe 3, employing LBT. The communication channel, e.g. a frequency range with a system bandwidth, may be accessed using a reservation signal. When the radio-access network node succeeds to access the channel, here during the same subframe 3, the radio-access network node transmits an uplink grant to one or more wireless communication devices. This may be in the same or a following subframe. In the example depicted in Figure 8 the radio-access network node succeeds to access the channel in subframe 3 but transmission of the uplink grant extends into and/or takes place in subframe 4.

The uplink grant comprises information from which subframe on a certain number of subframes (OT=4) may be used in order to transmit data in the uplink, wherein OT denotes the (maximum) occupancy time of the communication channel. In the present case the subframe from which on subframes may be used for UL transmission is determined by the formula (n+4=8), where n=4. The uplink grant also contains information up until which subframe the uplink grant may be used. In the present case this subframe is set to subframe 18, cf. (Valid=18) in Figure 8. The information up until which subframe the uplink grant may be used is one example of a validity duration of an uplink grant.

The radio-access network node may continue to transmit this uplink grant in subframes 5 and 6. The radio-access network node then awaits UL transmission from the wireless communication device. By way of a reservation signal or a reference signals from the wireless communication device the radio-access network node may determine that the wireless communication device has access a communication channel for UL transmission.

The wireless communication device, after receiving the uplink grant, here in subframe 4, may determine the information contained in the uplink grant, e.g. that the uplink grant is valid throughout subframes 8 to 18. During subframes 8 and 9 however the LBT procedure of the wireless communication device failed, e.g. because the communication channel is busy.

In subframe 10 the wireless communication device succeeds to access the channel and transmits a reference/reservation signal, which is received by the radio-access network node in that same subframe 10. The reservation signal may be a random noise signal emitted by the wireless communication device. In the present case the wireless communication device transmits a DMRS (demodulation reference signal) by way of which the radio-access network node identifies the wireless communication device. The radio-access network node is thus able to determine until which subframe the uplink channel will be busy because of the uplink data transmission by the wireless communication device. In the present case this is determined by the formula (n+OT-1=13), with n=10, OT=4. In the subsequent subframes allowed for uplink data transmission, here subframes 10, 11, 12 and 13, the wireless communication device transmits uplink data, e.g. some kind of payload.

When the radio-access network node detects an UL transmission (from the wireless communication device the UL grant was dedicated for) it knows that the wireless communication device has succeeded with LBT and started to send UL data and can adjust the window of expected ULSCH (Uplink Shared Channel) receptions. In this case the radio-access network node can detect UL transmissions for example by at least one of the following: a known reference signal or reservation signal, for example: DMRS (Demodulation Reference Signal), SRS (Sounding Reference Signal; decoding a complete ULSCH message. As the DMRS, the SRS and also the CRC in a ULSCH message include wireless communication device specific information this enables the radio-access network node to identify the wireless communication device.

The detection reference signal could be transmitted in the last, or in a few of the last, symbols of a subframe to enable the radio-access network node to detect that the wireless communication device accessed the communication channel in that subframe.

The wireless communication device may receive the UL grant and may store a number of granted subframes, from when they are valid and/or an expiration time. According to Figure 8, the process of accessing a communication channel by the wireless communication device, denoted as UE in Figure 8, is started in a certain subframe - here subframe 8.

If the communication channel is accessed, the wireless communication device may mark one of the subframes the UL grant as used. If the channel is not accessed in the current subframe the wireless communication device continues to try to access the channel and no UL grant is used. An UL grant can thus be carried over and used in the next subframe despite an LBT failure in the uplink.

After receiving the reference/reservation signal the radio-access network node is able to determine that the channel will be occupied by uplink PUSCH transmission of the wireless communication device for the number of subframes indicated in the uplink grant, for subframe 11 this will be subframe 13. This is determined by the formula n+OT-2, where n=11, OT=4. Thus the radio-access network node is able to determine that the subframes following thereupon, i.e. subframes 14 to 18, will not be used for uplink transmission of this wireless communication device.

The validity duration of the uplink grant is illustrated as an arrowed horizontal line extending from (the beginning of) subframe 8 to (the end of) subframe 18.

Now turning to Figure 9, multiple uplink grants may be transmitted by the radio-access network node. When the radio-access network node schedules an UL grant it may not be sent due to LBT failure. To make it more probable that the UL grant is received at the wireless communication device, the radio-access network node can wait with sending the UL grant until it knows it has accessed a communication channel for DL transmission. This may delay the transmission of the UL grant for about 2 ms due to the time it takes for a signal assembled by Layer 2 scheduler to appear on the medium, and thus, increases the delay from when the wireless communication device can transmit data, e.g. in its buffer.

To ensure a fast transmission of the UL grant and to make it probable that the UL grant is received at the wireless communication device, the radio-access network node may transmit the grant as early as possible and continue to transmit grants until the communication channel is accessed.

The radio-access network node may thus start the LBT procedure and may insert an UL grant as part of the reservation signal. The radio-access network node continues to insert UL grants to the wireless communication device in each subframe until the DL channel is accessed and the radio-access network node knows that the grant is transmitted. This is the case for subframes 2 to 5 in Figure 9. For each subsequent UL grant that is transmitted the UL grant time window, determined by the uplink indication, is moved forward one subframe in time. In the present case the first UL grant transmitted in subframe 3 is valid until subframe 17, whereas second UL grant transmitted in subframe 4 is valid until subframe 18 etc. The UL grants that are actually transmitted to the wireless communication device are stored in the radio-access network node, and the radio-access network node must now be prepared to receive UL data until the end of time window transmitted in the last UL grant, i.e. according to the validity duration of the uplink grant transmitted in subframe 5.

When the first UL transmission is detected the radio-access network node knows which the first grant that the wireless communication device is utilizing is and can thus adjust the window of expected ULSCH (Uplink Shared Channel) receptions according to the content of that UL grant.

The wireless communication device may store the first grant it (successfully) receives, e.g. is able to decode. If overlapping grants (grants with overlapping grant window) are received in following subframes they are discarded. Thus the radio-access network node may send UL grants repeatedly until the radio-access network node determines that it has accessed a DL communication channel. Multiple (overlapping) UL grants may be discarded by the wireless communication device.

Accordingly, UL grants are valid within a "grant window" of subframes and are not bound to a specific subframe, and can therefore be used even if it takes time for the wireless communication device to access the UL communication channel. Also, letting the radio-access network node repeatedly send the UL grant until it is confirmed that the channel is accessed by the radio-access network node enables fast and robust sending of UL grants.

Now turning to Figure 10, a flowchart of a method carried out by a wireless communication device is illustrated. The wireless communication device receives a number M of uplink grants each of which is valid throughout a number of subframes between a subframe N1 and a subframe N2. The validity duration is thus provided by the subframe numbers N1 and N2. This is another example of a validity duration received by way of an uplink indication.

In order to determine the validity duration, i.e. up until when or up until which subframe, the uplink grant, i.e. the number of subframes allowed for transmission of data in the uplink, may be used, a variable n is set equal to subframe number N1 and a variable m is set equal to 1.

Subsequently an attempt is performed to transmit UL data in subframe n. This may be done according to an LBT mechanism as explained in the above. As uplink transmission is according to allowed only from subframe N1 on, the first subframe for such an attempt is subframe N1.

In case the attempt is successful, transmission of data is initiated in the same subframe n according to the uplink grant m (In case the first attempt to access the communication channel is successful m equals 1, and thus corresponds to the uplink grant received first). The wireless communication device may then continue uplink transmission for the number of uplink grants M received. However, subsequently, it may be determined whether the number of the (present) uplink grant m according to which the transmission of data has been performed is smaller than the number M of uplink grants received and whether the present subframe n is still within the validity duration, i.e. whether n is smaller than N2. If this is true variables n and m are incremented and transmission is continued for another subframe and the check is repeated. If m is smaller than M and/or n is smaller than N2 the transmission of data in the uplink communication channel is stopped. The wireless communication device may then have to receive one or more further uplink grants in order to continue transmission of data in the uplink.

In case the above mentioned step of accessing the communication channel via said LBT mechanism fails and the number n of the present subframe is still within the validity duration of the uplink grant, i.e. n is smaller than N2, another access attempt according to an LBT-mechanism may be performed and the variable n is incremented in order to perform an LBT access attempt in the subsequent subframe n+1.

If accessing a communication channel failed throughout all of the subframes N1 to N2 no further access attempt is performed. The wireless communication devices may then stop. Subsequently the wireless communication device may request or await to receive further uplink grants.

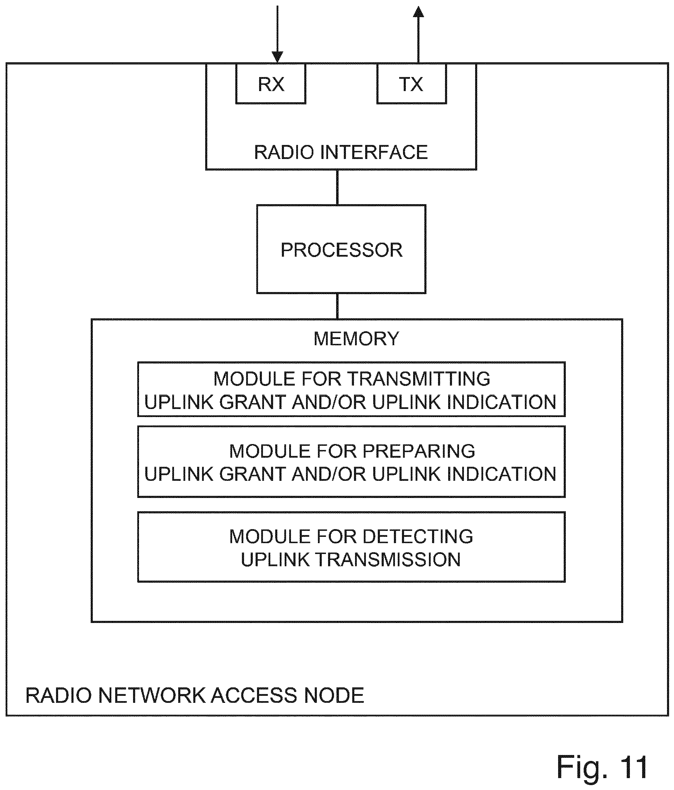

Now referring to Figure 11, exemplary structures for implementing the above-described concepts in a radio-access network node are schematically illustrated.

In the illustrated structure, the radio-access network node includes a radio interface capable of a radio access technology for performing data transmission via a communication channel to and/or from a wireless communication device.

The modules as depicted in Figure 11 and as described in the following may be distributed on several network nodes and do not have to be present in a single device. For example the module for transmitting, the module for preparing uplink grant and/or uplink indication as well as the module for detecting uplink transmission may be located in separate (logical) network nodes and/or devices and may only be operatively connected to each other.

Nonetheless, it is to be understood that for implementing transmitter (TX) functionalities the radio interfaces may include one or more transmitters, and that for implementing receiver functionalities (RX) the radio interface may include one or more receivers.

Further, the radio-access network node includes a processor and a memory coupled to the processor and optionally coupled to the first and second radio interface. The memory may include a ROM, e.g., a flash ROM, a RAM, e.g., a DRAM or SRAM, a mass storage, e.g., a hard disk or solid state disk, or the like. The memory includes suitably configured program code to be executed by the processor so as to implement the above-described functionalities of the radio-access network node. More specifically, the memory may include a module for accomplishing the provision of: transmitting an uplink grant and/or an uplink indication. Further, the memory may also include a module for (preparing said uplink grant and or said uplink indication (in the first place). In particular, the memory may also include a module for detecting an uplink transmission (on the (uplink) communication channel). However, the modules may be combined to form a single module.

It is to be understood that the structure as illustrated in Fig. 11 is merely schematic and that the radio-access network node may actually include further components which, for the sake of clarity, have not been illustrated, e.g., further interfaces or additional processors. Also, it is to be understood that the memory may include further types of program code modules, which have not been illustrated. For example, the memory may include program code modules for implementing typical functionalities of a radio-access network node or program code of one or more applications to be executed by the processor. According to some embodiments, also a computer program product may be provided for implementing concepts according to embodiments disclosed herein, e.g., a computer-readable medium storing the program code and/or other data to be stored in the memory.

The radio-access network node may further comprise one or modules, not shown, for carrying out the embodiments as described with regard to Figures 1 to 10.

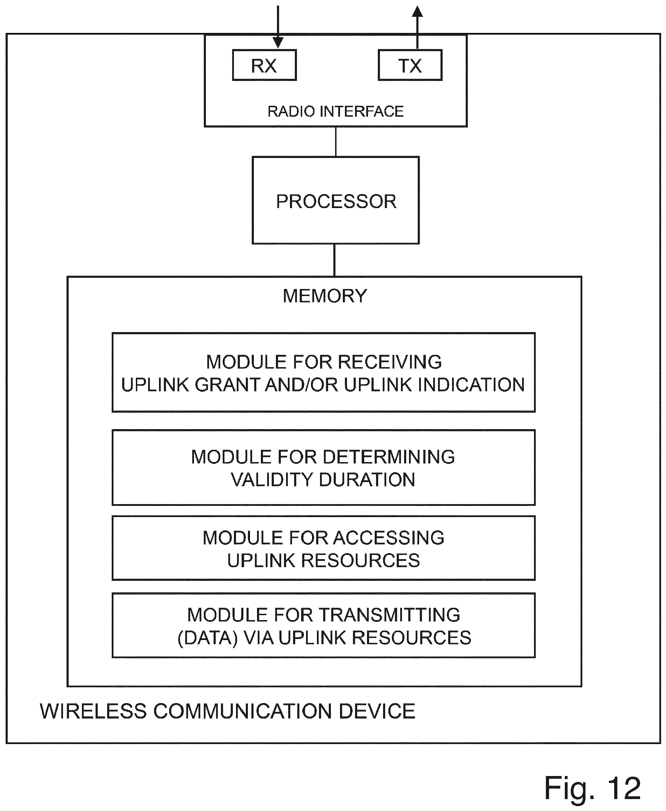

Now referring to Figure 12, exemplary structures for implementing the above-described concepts in the wireless communication device are schematically illustrated. In the illustrated structure, the wireless communication device includes a radio interface for performing data transmission to and/or from the radio-access network node via a communication channel.

It is to be understood that for implementing transmitter (TX) functionalities the radio interfaces may include one or more transmitters, and that for implementing receiver functionalities (RX) the radio interface may include one or more receivers.

Further, the wireless communication device includes a processor coupled to the first and/or second radio interface and a memory coupled to the processor. The memory may include a ROM, e.g., a flash ROM, a RAM, e.g., a DRAM or SRAM, a mass storage, e.g., a hard disk or solid state disk, or the like. The memory may include suitably configured program code to be executed by the processor so as to implement the above-described functionalities of the wireless communication device. More specifically, the memory may include a module for accomplishing provision of: receiving one or more uplink grants and/or one or more uplink indications. Further the memory may include a module for accomplishing provision of: determining a validity duration (for one or more uplink grants). Further the memory may include a module for accomplishing provision of: accessing uplink resources, e.g. according to an LBT mechanism. Further the memory may include a module for accomplishing provision of: transmitting (data) via uplink resources, e.g. the uplink resources access by way of said LBT mechanism. The modules can also be combined to form a single module.

It is to be understood that the structure as illustrated in Fig. 12 is merely schematic and that the wireless communication device may actually include further components which, for the sake of clarity, have not been illustrated, e.g. further interfaces or additional processors. Also, it is to be understood that the memory may include further types of program code modules, which have not been illustrated. For example, the memory may include program code modules for implementing typical functionalities of a wireless communication device or program code of one or more applications to be executed by the processor. According to some embodiments, also a computer program product may be provided for implementing concepts according to embodiments disclosed herein, e.g., a computer-readable medium storing the program code and/or other data to be stored in the memory.

## Claims

1. A method of scheduling uplink resources, the method comprising:
transmitting, by a radio-access network node (100), an uplink grant and an uplink indication, said uplink indication determining a validity duration of said uplink grant;
transmitting, by the radio-access network node (100), in subsequent subframes, subsequent uplink grants and subsequent uplink indications until an uplink transmission of a wireless communication device (101) is received; and
shifting forward, by the radio-access network node (100), the validity duration with each subsequent uplink grant, wherein shifting forward the validity duration comprises shifting the validity duration forward for a duration of one subframe.

2. The method according to the preceding claim, wherein said uplink grant comprises a number of granted subframes for the uplink transmission, wherein said uplink grant is transmitted together with said uplink indication, said uplink indication being part of said uplink grant, and wherein said uplink indication determines at least one of the following:
- a number of subframes; and
- an expiration time for which the uplink grant is valid.

3. The method according to any one of the preceding claims, further comprising:
transmitting, by the radio-access network node (100), said uplink indication and said uplink grant by using at least one of:
Listen-Before-Talk, LBT, and/or on a contention based access channel; and
an unlicensed frequency band, the unlicensed frequency band being a frequency band shared between different radio access technologies.

4. The method according to any one of the preceding claims, further comprising:
dedicating, by the radio-access network node (100), said uplink grant to the wireless communication device (101).

5. The method according to any one of the preceding claims, further comprising:
after transmission of said uplink indication and said uplink grant, detecting, by the radio-access network node (100), the uplink transmission of said wireless communication device (101), wherein the uplink transmission of said wireless communication device (101) is detected by way of a reservation signal transmitted by the wireless communication device (101), the reservation signal being a Sounding Reference Signal, SRS, or a Demodulation reference signal, DMRS, of the wireless communication device (101); and
determining, by the radio-access network node (100), a number of subframes for a reception of uplink data from said wireless communication device (101) based on a number of granted subframes.

6. A method of accessing uplink resources, the method comprising:
receiving, by a wireless communication device (101), an uplink grant and an uplink indication, said uplink indication determining a validity duration of said uplink grant;
receiving, by the wireless communication device (101), subsequent uplink grants and subsequent uplink indications, comprising uplink resources overlapping in time and/or frequency;
storing, by the wireless communication device (101), a first uplink grant, of the uplink grant and subsequent uplink grants, that is successfully received and decoded by the wireless communication device (101); and
discarding, by the wireless communication device (101), overlapping uplink grants received following the first uplink grant.

7. The method according to the preceding claim, wherein said uplink grant comprises a number of granted subframes for an uplink transmission, wherein said uplink grant is received together with said uplink indication, as part of said uplink grant, and wherein said uplink indication determines at least one of the following:
- a number of subframes; and
- an expiration time for which the uplink grant is valid.

8. The method according to any one of the preceding claims 6 and 7, further comprising:
performing, by the wireless communication device (101), the uplink transmission according to the first uplink grant and a first uplink indication of the subsequent uplink grants and the subsequent uplink indications.

9. The method according to any one of the preceding claims 6 to 8, further comprising:
accessing, by the wireless communication device (101), the uplink resources, wherein said uplink resources are accessed in an unlicensed frequency band, the unlicensed frequency band being a frequency band shared between different radio access technologies; and
transmitting, by the wireless communication device (101), dependent on a number of granted subframes, uplink data to a radio-access network node (100).

10. The method according to any one of the preceding claims 6 to 9, further comprising:
accessing, by the wireless communication device (101), said uplink resources by using at least one of:
a Listen-Before-Talk, LBT, mechanism; and
a transmission of a reservation signal, wherein the reservation signal is a Sounding Reference Signal, SRS, or a Demodulation reference signal, DMRS, of the wireless communication device (101).

11. A radio-access network node (100) for scheduling uplink resources, the radio-access network node (100) being operative to perform the method steps of any one of the claims 1 to 5.

12. A wireless communication device (101) for accessing uplink resources, the wireless communication device (101) being operative to perform the method steps of any one of the claims 6 to 10.

13. A computer program product comprising a program code to be executed by a processor of a radio-access network node (100), thereby configuring the radio-access network node (100) to operate in accordance with the method as defined by any one of claims 1 to 5.

14. A computer program product comprising a program code to be executed by a processor of a wireless communication device (101), thereby configuring the wireless communication device (101) to operate in accordance with the method as defined by any one of claims 6 to 10.

## Patentansprüche

1. Verfahren zum Planen von Uplink-Ressourcen, wobei das Verfahren Folgendes umfasst:
Übertragen, durch einen Funkzugriffsnetzwerkknoten (100), einer Uplink-Genehmigung und einer Uplink-Angabe, wobei die Uplink-Angabe eine Gültigkeitsdauer der Uplink-Genehmigung bestimmt;
Übertragen, durch den Funkzugriffsnetzwerkknoten (100), in nachfolgenden Subframes, von nachfolgenden Uplink-Genehmigungen und nachfolgenden Uplink-Angaben, bis eine Uplink-Übertragung einer Drahtloskommunikationsvorrichtung (101) empfangen wird; und
Vorwärtsschieben, durch den Funkzugriffsnetzwerkknoten (100), der Gültigkeitsdauer mit jeder nachfolgenden Uplink-Genehmigung, wobei das Vorwärtsschieben der Gültigkeitsdauer das Vorwärtsschieben der Gültigkeitsdauer für eine Dauer eines Subframes umfasst.

2. Verfahren nach dem vorhergehenden Anspruch, wobei die Uplink-Genehmigung eine Anzahl an genehmigten Subframes für die Uplink-Übertragung umfasst, wobei die Uplink-Genehmigung zusammen mit der Uplink-Angabe übertragen wird, wobei die Uplink-Angabe Teil der Uplink-Genehmigung ist und wobei die Uplink-Angabe zumindest eines des Folgenden bestimmt:
- eine Anzahl an Subframes; und
- eine Ablaufzeit, für die die Uplink-Genehmigung gültig ist.

3. Verfahren nach einem der vorhergehenden Ansprüche, ferner umfassend:
Übertragen, durch den Funkzugriffsnetzwerkknoten (100), der Uplink-Angabe und der Uplink-Genehmigung, indem zumindest eines des Folgenden verwendet wird:
Listen-Before-Talk, LBT, und/oder auf einem behauptungsbasierten Zugriffskanal; und
ein nichtlizenziertes Frequenzband, wobei das nichtlizenzierte Frequenzband ein Frequenzband ist, das zwischen unterschiedlichen Funkzugriffstechnologien geteilt wird.

4. Verfahren nach einem der vorhergehenden Ansprüche, ferner umfassend:
Widmen, durch den Funkzugriffsnetzwerkknoten (100), der Uplink-Genehmigung der Drahtloskommunikationsvorrichtung (101).

5. Verfahren nach einem der vorhergehenden Ansprüche, ferner umfassend:
nach der Übertragung der Uplink-Angabe und der Uplink-Genehmigung, Erfassen, durch den Funkzugriffsnetzwerkknoten (100), der Uplink-Übertragung der Drahtloskommunikationsvorrichtung (101), wobei die Uplink-Übertragung der Drahtloskommunikationsvorrichtung (101) durch ein Reservierungssignal erfasst wird, das durch die Drahtloskommunikationsvorrichtung (101) übertragen wird, wobei das Reservierungssignal ein Sounding Reference Signal, SRS, oder ein Demodulationsreferenzsignal, DMRS, der Drahtloskommunikationsvorrichtung (101) ist; und
Bestimmen, durch den Funkzugriffsnetzwerkknoten (100), einer Anzahl an Subframes für einen Empfang von Uplink-Daten von der Drahtloskommunikationsvorrichtung (101) basierend auf einer Anzahl an genehmigten Subframes.

6. Verfahren zum Zugreifen auf Uplink-Ressourcen, wobei das Verfahren Folgendes umfasst:
Empfangen, durch eine Drahtloskommunikationsvorrichtung (101), einer Uplink-Genehmigung und einer Uplink-Angabe, wobei die Uplink-Angabe eine Gültigkeitsdauer der Uplink-Genehmigung bestimmt;
Empfangen, durch die Drahtloskommunikationsvorrichtung (101), von nachfolgenden Uplink-Genehmigungen und nachfolgenden Uplink-Angaben, die Uplink-Ressourcen umfassen, die sich in Zeit und/oder Frequenz überlappen;
Speichern, durch die Drahtloskommunikationsvorrichtung (101), einer ersten Uplink-Genehmigung der Uplink-Genehmigung und von nachfolgenden Uplink-Genehmigungen, die durch die Drahtloskommunikationsvorrichtung (101) erfolgreich empfangen und decodiert wird; und
Verwerfen, durch die Drahtloskommunikationsvorrichtung (101), von überlappenden Uplink-Genehmigungen, die im Anschluss an die erste Uplink-Genehmigung empfangen werden.

7. Verfahren nach dem vorhergehenden Anspruch, wobei die Uplink-Genehmigung eine Anzahl an genehmigten Subframes für eine Uplink-Übertragung umfasst, wobei die Uplink-Genehmigung zusammen mit der Uplink-Angabe als Teil der Uplink-Genehmigung empfangen wird, und wobei die Uplink-Angabe zumindest eines des Folgenden bestimmt:
- eine Anzahl an Subframes; und
- eine Ablaufzeit, für die die Uplink-Genehmigung gültig ist.

8. Verfahren nach einem der vorhergehenden Ansprüche 6 und 7, ferner umfassend:
Durchführen, durch die Drahtloskommunikationsvorrichtung (101), der Uplink-Übertragung gemäß der ersten Uplink-Genehmigung und einer ersten Uplink-Angabe der nachfolgenden Uplink-Genehmigungen und der nachfolgenden Uplink-Angaben.

9. Verfahren nach einem der vorhergehenden Ansprüche 6 bis 8, ferner umfassend:
Zugreifen, durch die Drahtloskommunikationsvorrichtung (101), auf die Uplink-Ressourcen, wobei auf die Uplink-Ressourcen in einem nichtlizenzierten Frequenzband zugegriffen wird, wobei das nichtlizenzierte Frequenzband ein Frequenzband ist, das zwischen unterschiedlichen Funkzugriffstechnologien geteilt wird; und
Übertragen, durch die Drahtloskommunikationsvorrichtung (101), abhängig von einer Anzahl an genehmigten Subframes, von Uplink-Daten an einen Funkzugriffsnetzwerkknoten (100).

10. Verfahren nach einem der vorhergehenden Ansprüche 6 bis 9, ferner umfassend:
Zugreifen, durch die Drahtloskommunikationsvorrichtung (101), auf die Uplink-Ressourcen, indem zumindest eines des Folgenden verwendet wird:
ein Listen-Before-Talk-(LBT-)Mechanismus; und
eine Übertragung eines Reservierungssignals, wobei das Reservierungssignal ein Sounding Reference Signal, SRS, oder ein Demodulationsreferenzsignal, DMRS, der Drahtloskommunikationsvorrichtung (101) ist.

11. Funkzugriffsnetzwerkknoten (100) zum Planen von Uplink-Ressourcen, wobei der Funkzugriffsnetzwerkknoten (100) bedienbar ist, um die Verfahrensschritte nach einem der Ansprüche 1 bis 5 durchzuführen.

12. Drahtloskommunikationsvorrichtung (101) zum Zugreifen auf Uplink-Ressourcen, wobei die Drahtloskommunikationsvorrichtung (101) bedienbar ist, um die Verfahrensschritte nach einem der Ansprüche 6 bis 10 durchzuführen.

13. Computerprogrammprodukt, das einen Programmcode umfasst, der durch einen Prozessor eines Funkzugriffsnetzwerkknotens (100) auszuführen ist, wodurch der Funkzugriffsnetzwerkknoten (100) konfiguriert wird, um gemäß dem Verfahren nach einem der Ansprüche 1 bis 5 zu arbeiten.

14. Computerprogrammprodukt, das einen Programmcode umfasst, der durch einen Prozessor einer Drahtloskommunikationsvorrichtung (101) auszuführen ist, wodurch die Drahtloskommunikationsvorrichtung (101) konfiguriert wird, um gemäß dem Verfahren nach einem der Ansprüche 6 bis 10 zu arbeiten.

## Revendications

1. Procédé de programmation de ressources de liaison montante, le procédé comprenant :
la transmission, par un nœud de réseau d'accès radio (100), d'un octroi de liaison montante et d'une indication de liaison montante, ladite indication de liaison montante déterminant une durée de validité dudit octroi de liaison montante ;
la transmission, par le nœud de réseau d'accès radio (100), dans des sous-trames suivantes, d'octrois de liaison montante suivants et d'indications de liaison montante suivantes jusqu'à ce qu'une transmission de liaison montante d'un dispositif de communication sans fil (101) soit reçue ; et
le déplacement vers l'avant, par le nœud de réseau d'accès radio (100), de la durée de validité avec chaque octroi de liaison montante suivant, dans lequel le déplacement vers l'avant de la durée de validité comprend le déplacement de la durée de validité vers l'avant d'une durée d'une sous-trame.

2. Procédé selon la revendication précédente, dans lequel ledit octroi de liaison montante comprend un nombre de sous-trames octroyées pour la transmission de liaison montante, dans lequel ledit octroi de liaison montante est transmis ensemble avec ladite indication de liaison montante, ladite indication de liaison montante faisant partie dudit octroi de liaison montante, et dans lequel ladite indication de liaison montante détermine au moins l'un parmi ce qui suit :
- un nombre de sous-trames ; et
- un temps d'expiration pendant lequel l'octroi de liaison montante est valable.

3. Procédé selon l'une quelconque des revendications précédentes, comprenant en outre :
la transmission, par le nœud de réseau d'accès radio (100), de ladite indication de liaison montante et dudit octroi de liaison montante en utilisant au moins l'un parmi ce qui suit :
Listen-Before-Talk, LBT, et/ou un canal d'accès basé sur contention ; et
une bande de fréquences sans licence, la bande de fréquences sans licence étant une bande de fréquences partagée entre différentes technologies d'accès radio.

4. Procédé selon l'une quelconque des revendications précédentes, comprenant en outre :
la dédication, par le nœud de réseau d'accès radio (100), dudit octroi de liaison montante au dispositif de communication sans fil (101).

5. Procédé selon l'une quelconque des revendications précédentes, comprenant en outre :
après la transmission de ladite indication de liaison montante et dudit octroi de liaison montante, la détection, par le nœud de réseau d'accès radio (100), de la transmission de liaison montante dudit dispositif de communication sans fil (101), dans lequel la transmission de liaison montante dudit dispositif de communication sans fil (101) est détectée au moyen d'un signal de réservation transmis par le dispositif de communication sans fil (101), le signal de réservation étant un signal de référence de sondage, SRS, ou un signal de référence de démodulation, DMRS, du dispositif de communication sans fil (101) ; et
la détermination, par le nœud de réseau d'accès radio (100), d'un nombre de sous-trames pour une réception de données de liaison montante depuis ledit dispositif de communication sans fil (101) sur la base d'un nombre de sous-trames octroyées.

6. Procédé d'accès à des ressources de liaison montante, le procédé comprenant :
la réception, par un dispositif de communication sans fil (101), d'un octroi de liaison montante et d'une indication de liaison montante, ladite indication de liaison montante déterminant une durée de validité dudit octroi de liaison montante ;
la réception, par le dispositif de communication sans fil (101), d'octrois de liaison montante suivants et d'indications de liaison montante suivantes, comprenant des ressources de liaison montante se chevauchant dans le temps et/ou en fréquences ;
le stockage, par le dispositif de communication sans fil (101), d'un premier octroi de liaison montante, parmi l'octroi de liaison montante et des octrois de liaison montante suivants, qui est reçu et décodé avec succès par le dispositif de communication sans fil (101) ; et
le rejet, par le dispositif de communication sans fil (101), d'octrois de liaison montante se chevauchant reçus à la suite du premier octroi de liaison montante.

7. Procédé selon la revendication précédente, dans lequel ledit octroi de liaison montante comprend un nombre de sous-trames octroyées pour une transmission de liaison montante, dans lequel ledit octroi de liaison montante est reçu ensemble avec ladite indication de liaison montante, faisant partie dudit octroi de liaison montante, et dans lequel ladite indication de liaison montante détermine au moins l'un parmi ce qui suit :
- un nombre de sous-trames ; et
- un temps d'expiration pendant lequel l'octroi de liaison montante est valable.

8. Procédé selon l'une quelconque des revendications précédentes 6 et 7, comprenant en outre :
la réalisation, par le dispositif de communication sans fil (101), de la transmission de liaison montante en fonction du premier octroi de liaison montante et d'une première indication de liaison montante parmi les octrois de liaison montante suivants et les indications de liaison montante suivantes.

9. Procédé selon l'une quelconque des revendications précédentes 6 à 8, comprenant en outre :
l'accès, par le dispositif de communication sans fil (101), aux ressources de liaison montante, dans lequel lesdites ressources de liaison montante sont accédées dans une bande de fréquences sans licence, la bande de fréquences sans licence étant une bande de fréquences partagée entre différentes technologies d'accès radio ; et
la transmission, par le dispositif de communication sans fil (101), en fonction d'un nombre de sous-trames octroyées, de données de liaison montante à un nœud de réseau d'accès radio (100).

10. Procédé selon l'une quelconque des revendications précédentes 6 à 9, comprenant en outre :
l'accès, par le dispositif de communication sans fil (101), auxdites ressources de liaison montante en utilisant au moins l'un parmi ce qui suit :
un mécanisme Listen-Before-Talk, LBT ; et
une transmission d'un signal de réservation, dans lequel le signal de réservation est un signal de référence de sondage, SRS, ou un signal de référence de démodulation, DMRS, du dispositif de communication sans fil (101).

11. Nœud de réseau d'accès radio (100) pour la programmation de ressources de liaison montante, le nœud de réseau d'accès radio (100) étant opérationnel pour réaliser les étapes de procédé selon l'une quelconque des revendications 1 à 5.

12. Dispositif de communication sans fil (101) pour l'accès à des ressources de liaison montante, le dispositif de communication sans fil (101) étant opérationnel pour réaliser les étapes de procédé selon l'une quelconque des revendications 6 à 10.

13. Produit de programme informatique comprenant un code de programme à exécuter par un processeur d'un nœud de réseau d'accès radio (100), en configurant de ce fait le nœud de réseau d'accès radio (100) pour fonctionner conformément au procédé selon l'une quelconque des revendications 1 à 5.

14. Produit de programme informatique comprenant un code de programme à exécuter par un processeur d'un dispositif de communication sans fil (101), en configurant de ce fait le dispositif de communication sans fil (101) pour fonctionner conformément au procédé selon l'une quelconque des revendications 6 à 10.
